# EUROPEAN PATENT SPECIFICATION

(11) **EP 3 718 936 B1**
(45) Date of publication and mention of the grant of the patent: **12.07.2023**
(21) Application number: 19382248.3
(22) Date of filing: 04.04.2019
(51) Int. Cl.: B65G 69/28, G09F 19/22, G09F 13/22, G09F 27/00

(54) **DOCK SHELTER WITH LIGHTING FIXTURES**
TORABDICHTUNG MIT LEUCHTEN
ABRIS DE QUAI AVEC DISPOSITIF D'ÉCLAIRAGE

(43) Date of publication of application: 07.10.2020
(73) Proprietor: PORTES BISBAL, S.L., 17116 Cruïlles (ES)
(72) Inventor: Mir Pons, Angel, 17116 CRUÏLLES (ES)
(74) Representative: ZBM Patents - Zea, Barlocci & Markvardsen

(56) References cited:
- FR-A1- 2 899 216
- US-A1- 2008 127 435
- US-A1- 2011 075 441
- US-A1- 2016 075 526
- US-A1- 2017 341 516
- Spotled: "Aluminum Profiles", , 8 December 2013 (2013-12-08), XP055627768, Retrieved from the Internet: URL:https://web.archive.org/web/2013120810 2810if_/http://spotled.be/telechargement/P rofiles-Aluminium-LED/Spotled-Profiles-Alu minium-LED.pdf [retrieved on 2019-10-01]
- Angel Mir: "Guide Led - Sistema de guiado de camiones | Angel Mir | Àngel Mir", angelmir.com, 23 December 2018 (2018-12-23), pages 1-5, XP093006440, Retrieved from the Internet: URL:https://www.angelmir.com/es/puntos-de- carga/accesorios-para-muelles-de-carga/sis tema-de-guiado-de-camiones/sistema-guide-l ed.html [retrieved on 2022-12-09]

## Description

The present disclosure relates to dock shelters.

### BACKGROUND

It is widely known the use of dock shelters in access openings like dock openings in warehouses or similar buildings intended to store or at least handle goods carried by cargo vehicles, e.g. trucks, vans or the like.

A particular example of dock shelters consists in inflatable ones, that is to say, dock shelters provided with inflatable elements intended to expand against the cargo vehicle while the vehicle is parked at the dock opening. The inflatable elements are usually embodied as air bags which can be inflated through a continuous air supply from an air flow source. When the air supply is stopped the air bags become deflated.

Inflatable elements act as protective barrier for the goods when they are transferred from or to the cargo vehicles. The inflatable elements can protect goods from weather conditions or even dirt. Furthermore, the inflatable elements also act as an isolation barrier that allows reducing a waste of energy used to keep the warehouse at a predefined temperature when the dock doors are open and occupied by cargo vehicles.

Before performing any task related to the handling of goods, the vehicle's cargo area must be aligned with the dock opening. In order to align the vehicle's cargo area with the dock opening, drivers of the cargo vehicles have to perform a parking manoeuvre. When performing such manoeuvre there is a risk of collision between the vehicle and the dock shelters. To reduce the risk of collision, a person may guide the driver to park the vehicle in the proper place to reduce the risk of collision. However, the risk is not fully avoided. Furthermore, the risk may be even higher at night or during adverse weather conditions.

US2011075441 (A1) discloses examples of light fixtures for doorways and other areas.

In addition, a dock shelter according to the preamble of claim 1 is known from the website of. Angel Mir (https://www.angelmir.com/es/puntos-de-carga/accesorios-para-muelles-de-carga/ sistema-de-guiado-de-camiones/sistema-guide-led.html) since December 2018.

The present disclosure provides examples of dock shelters that at least partially resolve some of the aforementioned disadvantages.

### SUMMARY

The invention is set out in the appended set of claims.

According to the invention, a dock shelter according to claim 1 to be placed around a dock door opening is provided.

The dock shelter comprises a U-shaped canopy which has two side portions and one top portion. The canopy has a distal face intended to be facing away from a dock door wall, wherein the canopy comprises a U-shaped distal frame positioned at the distal face. The dock shelter comprises a distal light source extending at least partially along the distal frame, and the distal light source is adapted to change its visual appearance.

In this aspect, the dock shelter may reduce the risk of collision between the vehicle and the dock shelter. The vehicle's driver is aware of the relative distance from the dock shelter to the vehicle due to the change in visual appearance of the distal light source. The driver is provided with a guide to park properly as well. These features may be achieved substantially regardless the weather conditions.

According to the invention, the distal light source may be an integral part of the dock shelter rather than a separate part from the dock shelter.

The term "visual appearance" may be related to the features of an emitted light, e.g. a light emitted by a distal light source or the like.

A visual appearance change in the present disclosure may comprise a change in different light features, e.g. a change in colour and/or a change in continuity, i.e. a steady or flashing light. The different light features may be varied substantially simultaneously or at different instants.

The U-shaped canopy may be configured as a rigid or extendable structure. Rigid may be understood as the opposite to extendable/retractable. When the canopy is configured as a rigid structure, the top and side portions may be panels and when it is configured as an extendable structure, it may have a skeleton frame having a number of bars articulated to each other so as to allow an extension or retraction of the U-shaped canopy. In the latter case, the top and side portions may be thus extendable / retractable.

In some examples of the dock shelter, it may comprise an inflatable bag to be expanded towards a vehicle. Each of the side and top portions may have an associated inflatable bag. The canopy may protect the inflatable bag from the weather conditions, dust or the like.

Accordingly, a method of operation of a dock shelter according to any of claims 1 to 13 is disclosed. The method comprises changing a visual appearance of the distal light source depending on the proximity of a vehicle to the dock door.

Advantages derived from this aspect may be similar to those mentioned regarding the method of the first aspect.

### BRIEF DESCRIPTION OF THE DRAWINGS

Non-limiting examples of the present disclosure will be described in the following, with reference to the appended drawings, in which:
Figure 1 schematically shows a perspective view of a dock shelter according to one example;
Figure 2 schematically shows an elevation view of the dock shelter of figure 1;
Figure 3 schematically shows a partial view of a left upper corner of the dock shelter of figure 1;
Figure 4 schematically shows a partial view of a right upper corner of the dock shelter of figure 1;
Figure 5 schematically shows a perspective view of the dock shelter of figure 1 with a U-shaped proximal frame;
Figure 6 schematically shows a perspective view of a dock shelter with a U-shaped proximal frame according to a further example;
Figure 7 schematically shows the partial view of figure 4 with an example of attached light sign;
Figure 8 schematically shows an enlarged partial view of a distal frame of the dock shelter of figure 1 according to one example;
Figure 9 schematically shows a side view of the distal frame of figure 8;
Figure 10 schematically shows an enlarged partial view of a distal frame of the dock shelter of figure 6 according to a further example;
Figure 11 schematically shows a side view of the distal frame of figure 10;
Figure 12 schematically shows a partial view of the proximal frame of the dock shelter of figure 5;
Figure 13 schematically shows the partial view of figure 12 with a light beam according to one example;
Figure 14 schematically shows a partial view of the proximal frame of the dock shelter of figure 6;
Figure 15 schematically shows the partial view of figure 14 with a light beam according to one example;
Figure 16 schematically shows a side partial view of the dock shelter of figure 6.

### DETAILED DESCRIPTION OF EXAMPLES

In these figures the same reference signs have been used to designate matching elements.

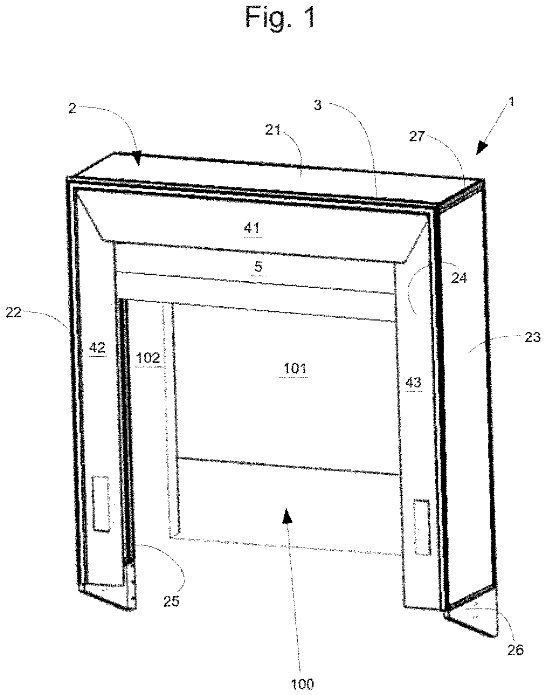

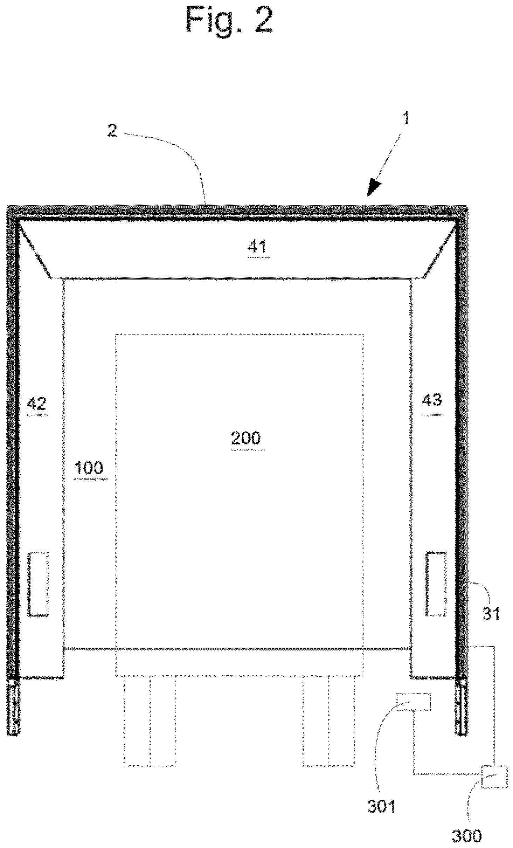

Figure 1 schematically shows a perspective view of a dock shelter 1 according to one example. Figure 2 schematically shows an elevation view of the dock shelter 1 of figure 1. As shown in figures 1 and 2, the dock shelter 1 is adapted to be placed around a dock door opening 101 of a dock door 100. The dock door 100 may belong to a warehouse or the like. The dock shelter 1 comprises a U-shaped canopy 2 which has two side portions 22, 23 and one top portion 21. The side and top portions may be made from any suitable material such as metal, plastic, canvas or the like.

The canopy 2 may have an inflatable bag 5 to be expanded towards a vehicle 200. Each of the side and top portions may have an associated inflatable bag 5. This way the formed canopy 2 may protect the inflatable bag 5 from e.g. weather conditions. In figure 1, the bag 5 has been illustrated associated to only the top portion 41 for the sake of clarity although each side portion 42, 42 may have their corresponding inflatable bag. Alternatively, a single inflatable bag may be attached to the canopy 2. In this alternative, the inflatable bag may have a generally U-shape configuration so as to be associated with all the portions of the canopy 2. The inflatable bag may be made from any suitable material such as rubber or rubber-like. The inflatable bag may be inflated and/or deflated by means of any air supply arrangements known in the art.

An example of vehicle 200 has been illustrated in figure 2 using dotted lines because it does not fall in the scope of protection of the claims. The vehicle may be a cargo vehicle such as a truck or lorry, a van, a pick-up or the like.

Following with figure 1, the canopy 2 has a distal face 24 intended to be facing away from the dock door wall 102 and a proximal face 25 intended to be facing towards the dock door wall 102. The distal face 24 of the canopy projects from the wall and is oriented outwards the dock door 100, this way the distal face 24 may face a vehicle 200 to be parked. The proximal face 25 may be fixedly attached to dock door wall 102 at least partially through a pair of supports 26. The proximal face 25 may be in contact with the dock door wall 102 in a direct or indirect way.

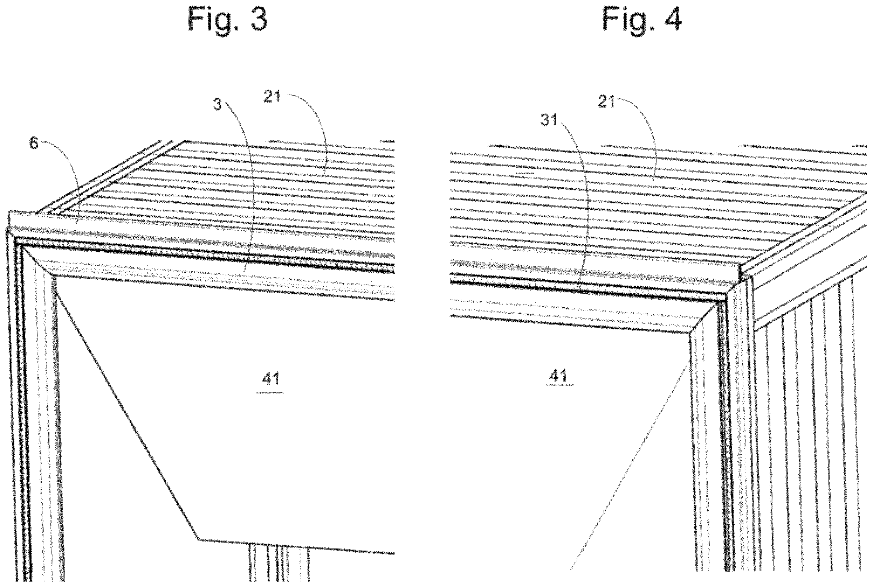

Figure 3 schematically shows a partial view of a left upper corner of the dock shelter of figure 1 and figure 4 schematically shows a partial view of a right upper corner of the dock shelter of figure 1, i.e. an upper corner and the opposite upper corner. As can be seen in figures 1 to 4, the canopy 2 further comprises a U-shaped distal frame 3 positioned at the distal face 24.

In some examples of the dock shelter 1, the distal frame 3 may extend along the top and side portions of the canopy 2 either fully or at least partially. Furthermore, the distal frame 3 may be arranged at the distal face 24 substantially as the outline of the canopy 2.

In the examples of figures 1 to 4, it can be seen that the dock shelter 1 comprises a distal light source 31 extending at least partially along the distal frame 3. The distal light source may be linear shaped. As the distal frame 3 may be arranged substantially as the outline of the canopy 2, the distal light source 31 may highlight the position and the contour of the distal face 24. In some examples, the distal light source 31 may act as a substantially linear end outline marker of the dock shelter.

The distal light source 31 is adapted to change its visual appearance. The change in visual appearance may be related for instance to a colour of an emitted light and/or to an intermittence of the emitted light. However, other features of the emitted light may be varied e.g. brightness or even changing a particular shape pattern of the light. Further details about the distal light source 31 will be provided later on.

The dock shelter 1 may further comprise a proximity sensor 301 to detect the distance of a vehicle 200 from the dock door, and a controller 300 to change the visual appearance of the distal light source 31 depending on the detected distance. The proximity sensor 301 may be of any available type such as ultrasonic, RADAR, LIDAR, computer vision in an artificial intelligence approach or the like. The amount of proximity sensors 301 may vary according to particular requirements. The controller 300 may be in data communication with the proximity sensor 301, and may be configured to control the operation of the distal light source 31 as well. Further details about the operation of changing the visual appearance of the distal light source 31 will be set forth along with a method of operation of the dock shelter 1.

As used herein, the term "controller" refers not only to integrated circuits referred to in the art as being included in a computer, but also refers to a processor, a microcontroller, a microcomputer, a programmable logic controller (PLC), an application specific integrated circuit, and other programmable circuits. The controller is also configured to compute control algorithms and communicate to a variety of Ethernet or serial-based protocols (Modbus, OPC, CAN, etc.). Additionally, a memory device(s) may be in data communication with the controller and may comprise memory element(s) including, but not limited to, computer readable medium (e.g., random access memory (RAM)), computer readable non-volatile medium (e.g., a flash memory), a floppy disk, a compact disc-read only memory (CD-ROM), a magneto-optical disk (MOD), a digital versatile disc (DVD) and/or other suitable memory elements. Such memory device(s) may be configured to store suitable computer-readable instructions that, when implemented by the controller(s), configure the processor to perform the various functions as described herein.

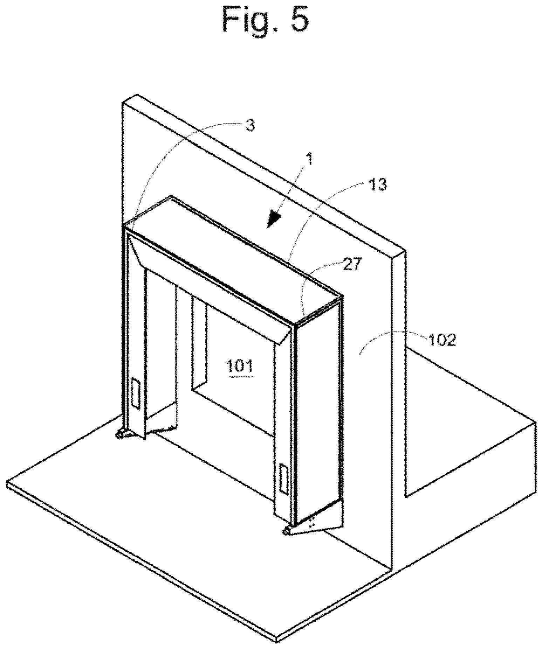

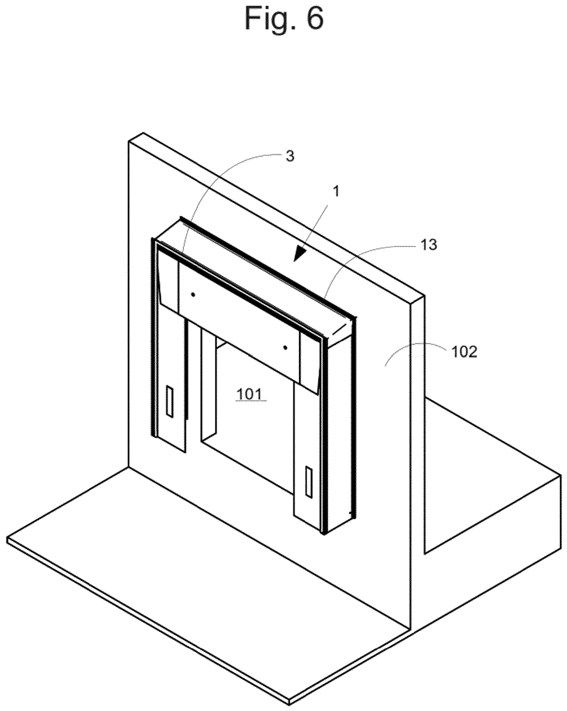

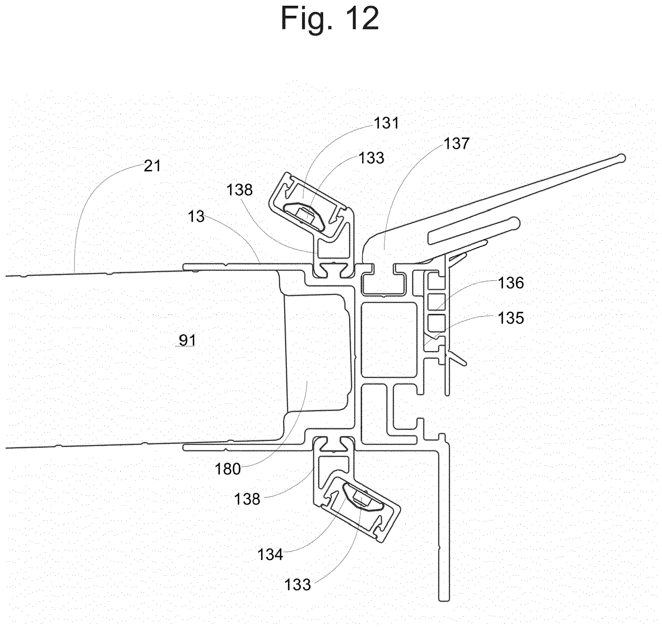

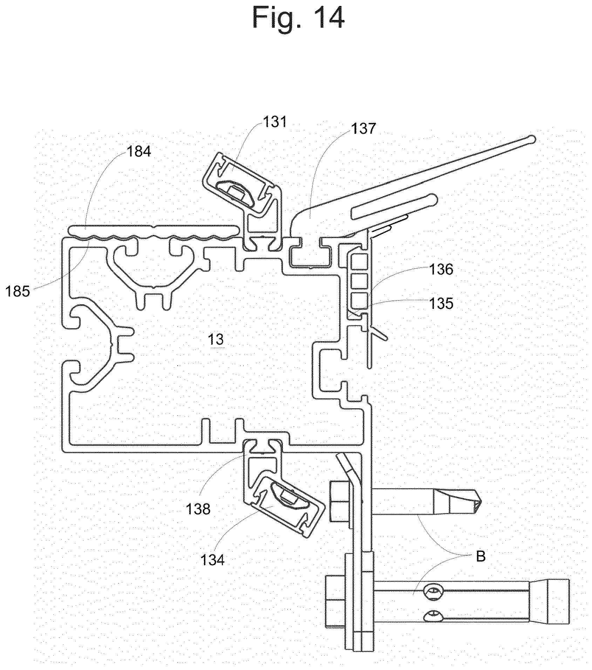

The dock shelter 1 may further comprise a U-shaped proximal frame 13 intended to be facing towards the dock door wall 102. The proximal frame 13 may show a substantially similar construction to the distal frame 3. Figures 12 and 14 schematically show details of the proximal frame 3 of the corresponding example of dock shelter of figures 5 and 6. In some examples of the dock shelter 1, the proximal frame 31 may extend along the top and side portions of the canopy 2 either fully or at least partially. Furthermore, the proximal frame 13 may be arranged at the proximal face 25 substantially as the outline of the canopy 2. The proximal frame 13 may be placed opposite to the distal frame 3.

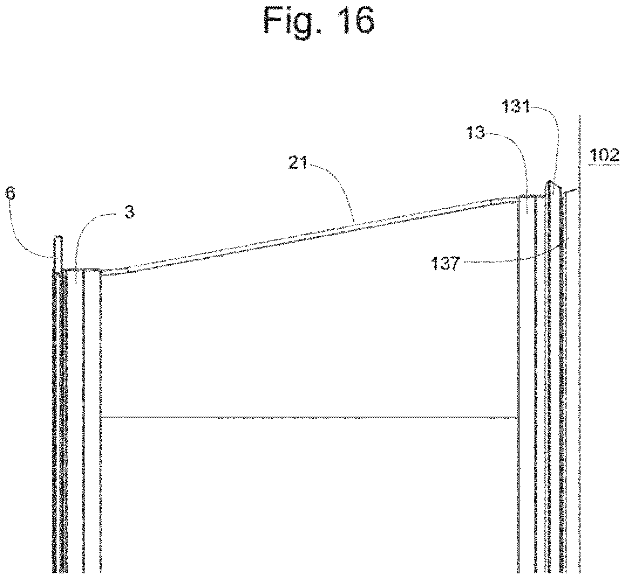

The proximal frame 13 may comprise a proximal light source 131 extending at least partially along the proximal frame 13. The proximal light source may be positioned facing towards a dock door wall 102, see for instance figure 16. Thus, a light emitted by the proximal light source 131 may be projected against the dock door wall 102. This way, part of the dock door wall 102 may be illuminated at night or during adverse weather conditions. A combination of distal and proximal light sources 31, 131 may provide an enhanced

The proximal light source 131 may be linear shaped. Alternatively, it may be configured as multiple spots. The visual appearance of the proximal light source 131 may be varied in a similar way to the case of the distal light source 131 so no further details will be provided.

The proximal frame 13 may further comprise an illumination light source 134 extending at least partially along the proximal frame 13. The illumination light source 134 may be positioned facing the dock door opening 101 and/or so as to illuminate a vehicle's cargo area when parked in the dock. The illumination light source 134 may be linear shaped or may have multiple spots.

The proximal light source 131 and the illumination light source 134 may protrude from the proximal frame 13 as shown in figures 12 to 14. To this end, each of the proximal light source 131 and the illumination light source 134 may comprise a projecting base 138 attached to the proximal frame 13. The projecting base 138 may have a generally L-shaped cross section. The projecting base 138 may be configured so as to place the proximal light source 131 and/or the illumination light source 134 forming a predetermined angle with respect to the top or side portions of the canopy 2. This way, the light emitted by the proximal light source 131 and/or the illumination light source 134 may be aimed to a predefined area.

The base 138 may be attached to the proximal frame 13, for instance, by means of a tongued and grooved joint or the like. Therefore, the proximal light source 131 and/or the illumination light source 134 may be configured as being detachable. The user may install some of them depending on the case. Figure 12 and 14 shows an example of attachment through a tongued and grooved joint.

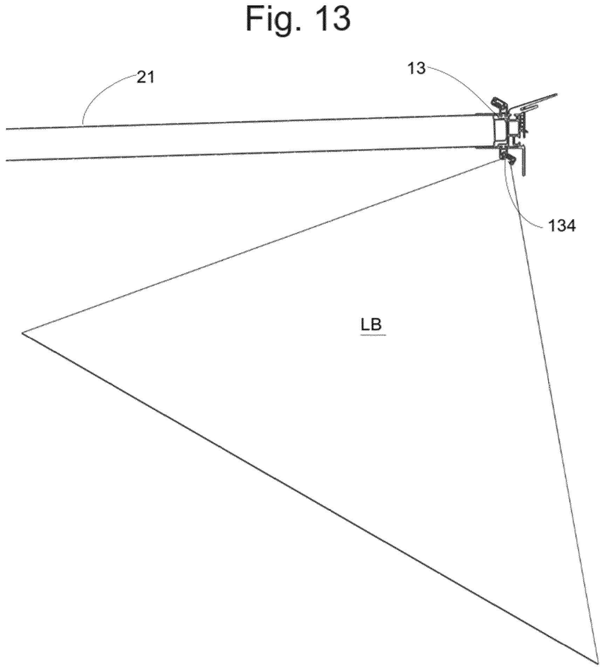

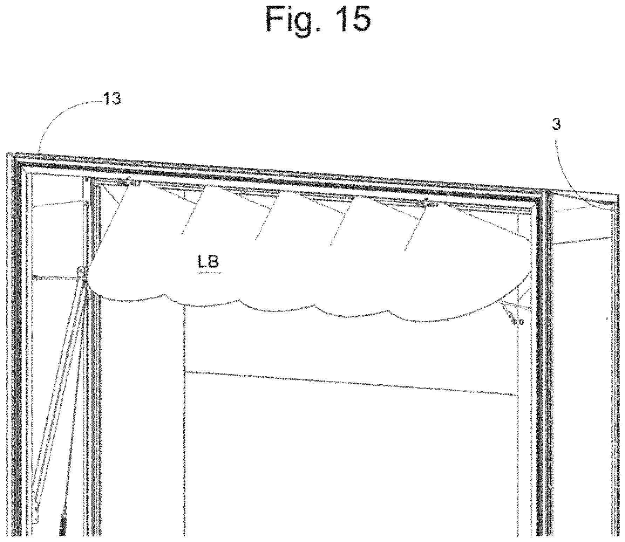

Figure 13 shows the top portion and the proximal frame of Figure 12 with a schematic lighting beam LB emitted by the illumination light source 134. Figure 15 shows a perspective view of the proximal frame 13 and another schematic lighting beam LB emitted by the illumination light source 134.

Although the examples of figures 12 and 14 have both the proximal light source 131 and the illumination light source 134, an exemplary dock shelter might have at least one of them.

The controller 300 may be configured to control the operation of the proximal light source 131 and/or the illumination light source 134.

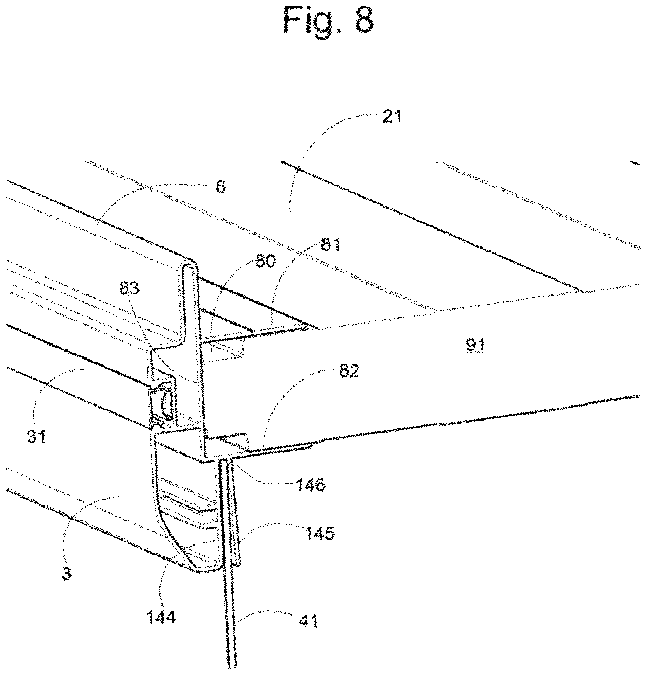

Moreover, frames 3, 13 may be metallic profiles, e.g. made from aluminium. This example can be seen in figures 8 to 11 and 12 to 13. The distal frame 3 may comprise a channel 32 and the distal light source 31 may be arranged within the channel. The distal light source 31 may comprise a series of LED's 33 arranged in the channel 32. The proximal light source 131 and the illumination light source 134 may also comprise a series of LED's 133 arranged in their corresponding base.

It would be also possible to combine the features of the examples of figures 12 and 13 and/or figures 14 and 15 with another dock shelter.

As shown in figures 1, 5 and 7, the canopy further comprises edge beams 27 placed between the top portion 21 and each of the side portions 22, 23. Each of the edge beams 27 is positioned from the distal face 24 to the proximal face 25.

The dock shelter may further comprise a light sign 7 attached to the canopy 2. The light sign 7 may be adapted to change its visual appearance. The visual appearance may be related to a status of a specific dock door 100. The visual appearance, i.e. features of the light emitted may be changed or selected on the basis of the status of the door 100, e.g. if the dock door 100 is in use or available. The light sign 7 may be configured to display light-up numbers, letters or the like which may be related to a specific dock door 100. Thus, the vehicle's driver may be easily and rapidly informed about an available dock door to park the vehicle.

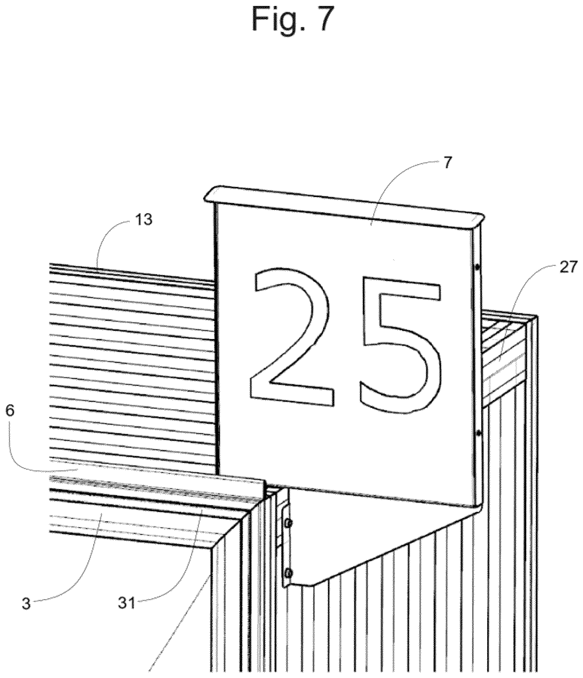

An example of attached light sign 7 is illustrated in figure 7. In this figure, an exemplary light sign 7 is attached to the edge beam 27. Alternatively, the light sign 7 may be attached to a side portion 22, 23 or a top portion 21, or the distal frame 3 or the proximal frame 13 as well. By providing the light sign 7 this way, displaying of the sign may be improved in comparison with those solutions having signs placed at the dock door walls.

The light sign 7 may be in data communication with the controller 300 and its operation may be automatically managed by the controller 300. Alternatively, the light sign 7 may be manually operated (on-demand), e.g. actuated remotely by the user.

When the operation of the light sign 7 is automatically managed by the controller 300, the light sign 7 may be actuated as a function of the relative distance between the vehicle and the proximity sensor. By way of example, if a vehicle is sensed occupying a dock door, then the controller 300 may determine the status of the dock door as occupied and may prevent the actuation of the light sign 7 until the status of the dock door is determined as available. In another example, the controller 300 may send an activation command to the light sign 7 until the presence of the vehicle is sensed, and then the controller may send another command to turn off the light sign 7.

When the operation of the light sign 7 is manually trigged by the user, the switched on light sign 7 may serve as a beacon for the driver. The controller 300 may receive the command from the user. If a vehicle is sensed in the dock door, the controller 300 may prevent the light sign 7 from being activated regardless of the user's demand.

The activation of the light sign 7 may be related to a change in the visual appearance thereof.

It would be also possible to combine the features of the example of figure 7 and/or the features disclosed in claim 7 and 8 with another dock shelter.

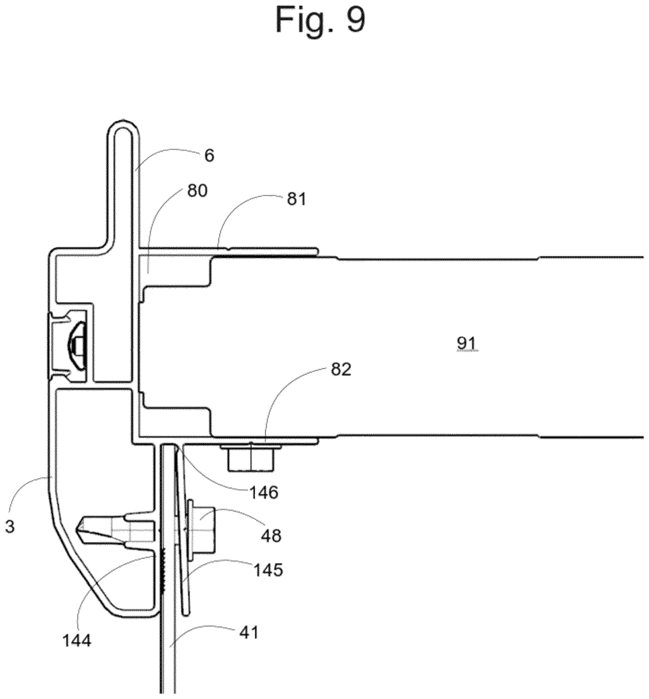

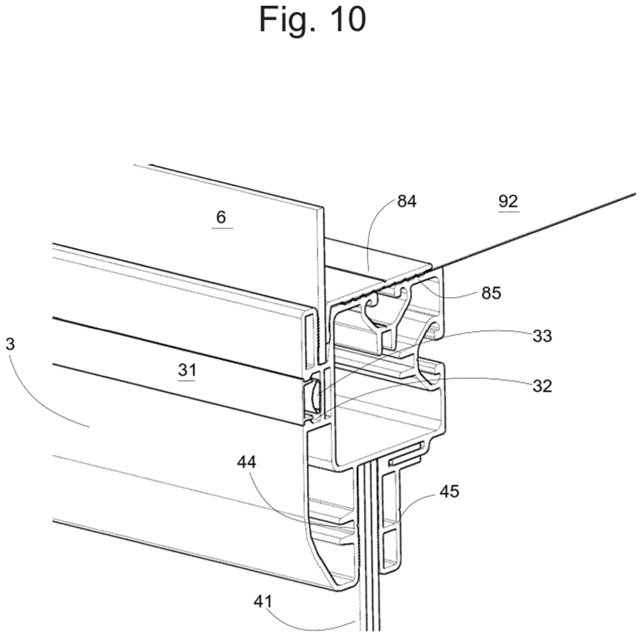

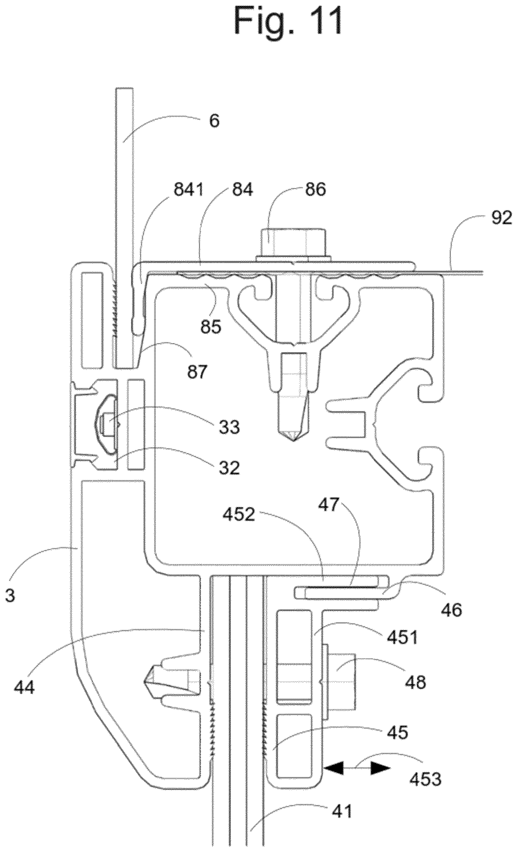

Figures 8 to 10 show examples of distal frames 3. Particularly, figure 8 schematically shows an enlarged partial view of a distal frame 3 of the dock shelter 1 of figure 1 according to one example, and figure 9 schematically shows a side view of the distal frame 3 of figure 8. Figure 10 schematically shows an enlarged partial view of a distal frame 3 of the dock shelter 1 of figure 1 according to a further example and figure 11 schematically shows a side view of the distal frame of figure 10.

The dock shelter 1 according to the examples of figures 8 to 10 may have a canopy 2 which may further comprise a curtain 41, 42, 43 attached to the distal frame 3. The curtains 41, 42, 43 may be intended to be arranged between each of the portions 21, 22, 23 of the canopy 2 and the vehicle 200. This way, the curtain 41, 42, 43 may be envisaged to protect the inflatable bag 5 from weather conditions, dirt, sunlight or even scratches caused by the vehicle. Each of the curtains 41, 42, 43 may be formed as a sheet or group of sheets made from any suitable material such as rubber or rubber-like.

The distal frame 3 may comprise a pair of jaws 44, 45, 144, 145 to clamp at least one curtain 41, 42, 43 between them, wherein one of the jaws 44, 144 may be fixed to rest of the distal frame 3 and the other jaw 45, 145 may be movably attached to the rest of the distal frame 3. The pair of jaws 44, 45, 144, 145 may be arranged forming a groove or the like in the distal frame 3 so as to receive the curtain between them. In some examples both jaws 44, 45, 144, 145 may have a toothed region to grip the curtains between them.

In the example illustrated in figures 10 and 11, the movable jaw 45 can be moved towards and away from the fixed jaw 44. This way, the relative distance between the pair of jaws 44, 46 may be easily adjusted as a function of the width and/or the number of curtains 41, 42, 43. Figure 11 shows the movable jaw 45 which has an L-shaped cross-section with a pressing portion 451 to clamp the curtain 41 and a guiding portion 452 to guide the movable jaw 45 towards and away from the fixed jaw 44. Arrow 453 in figure 7 illustrates direction that the movable jaw 45 may follow to be displaced relative to the fixed jaw 44. The pressing portion 451 is intended to face the fixed jaw 44 to clamp the curtain 41. The illustrated example of figure 11 shows a tongue 46 and groove 47 joint defined between the guiding portion 452 and the rest of the distal frame 3. The tongue 46 and groove 47 are configured to allow a sliding and relative movement between the guiding portion 452 and the rest of the distal frame 3. Although figure 11 shows an example in which the groove 47 is formed in the guiding portion 452 and the tongue 46 in the rest of the distal frame 3, it may be arranged conversely. Furthermore, alternative configurations can be envisaged to guide the movable jaw 45 with respect to the rest of the distal frame 3.

In the examples of figures 10 and 11 the fixed jaw 44 is integrally formed with the rest of the distal frame 3 and the movable jaw 45 is formed as a separate part. In some other examples of the dock shelter 1, as that one illustrated in figures 8 and 9, both jaws are integrally formed with the rest of the distal frame 3. Alternatively, both jaws 44, 45, 144, 145 may be separate parts from the rest of the distal frame 3.

The movable jaw 145 may be movably attached to the rest of the distal frame 3 in an alternative way to that one described above. In the alternative way, at least one of the jaws 145 may be hinged to the distal frame 3. Figures 8 and 9 illustrate the movable jaw 145 hinged to the rest of the distal frame 3. Jaw 145 may be hinged through an elastic end 146 which is connected to the distal frame 3. The end 146 may comprise an indentation arranged substantially parallel to the distal frame 3. The indentation may allow easily bending the jaw 145. In alternative examples not illustrated, a hinge may be provided between to movable jaw 145 and the rest of the distal frame 3. The hinge may have a substantially elastic behaviour so as to push the movable jaw 145 against the fixed jaw 144.

In the examples of figures 10 and 11, when the user wants to put the curtain 41 between the jaws, they may pull the movable jaw 145 away from the fixed jaw 144 and place a portion of the curtain between the jaws. Thanks to the elastic end 146 the movable jaw 145 try to return to its original status and this way the curtain 41 may be clamped between the jaws 144, 145. Thus, the movable 145 may be pushed against the fixed jaw 144.

Screws or bolts 48 may be used to further secure the curtains 41, 42, 43 between the jaws. Screws 48 may pass through the jaws 44, 45, 144, 145 and the curtains 41, 42, 43 which are, at least partially, sandwiched between the jaws.

It would be also possible to combine the features of figures 8 to 11 and/or the features disclosed in claims 9 to 12 with another dock shelter.

In further examples of the dock shelter 1, the canopy 2 may further comprise a laminar baffle 6 in a substantially upright position with respect to and along the top portion 21. This way, water in the top portion 21 may be prevented from falling on the vehicle 200. The laminar baffle 6 may lead the water away from the vehicle 200. In figure 16, an example of dock shelter 1 is shown which have a baffle 6 and a slanted top portion 21. Water may run over the top portion 21 towards the distal face 24 and the baffle 6 may lead the water away from the vehicle 200. Although the example of figure 16 is related to a slanted top portion, the baffle may have the same advantages along with a flat top portion.

Furthermore, the laminar baffle 6 may be formed integrally with the rest of the distal frame 3 as illustrated in figures 8 and 9, or may be a separate element from the rest of the distal frame 3 as illustrated in figure 10 and 11. It would be also possible to combine the features of the laminar baffle 6 of figures 8 to 11 with another dock shelter.

It can be seen in figures 8 and 9 that the distal frame 3 may comprise a cover 84 which may be arranged separately from the rest of the distal frame 3 and facing a complementary pressing surface 85 of the distal frame 3. A piece 92 made from flexible material or the like may be clamped between the separate cover 84 and the pressing surface 85. This way, the piece 92 of flexible material may be trapped and may be prevented from moving or escaping from the distal frame. The flexible material of the piece may be a plastic or the like. Alternatively, the piece 92 could be a panel.

The cover 84 may be fixedly attached to the pressing surface 85 by means of a bolt 86 or the like. Both the cover 84 and the pressing surface 85 may have a toothed region to grip the piece 92 of flexible material between them. Furthermore, the cover 84 may have an anchoring end 841 to enter a cleft 87 in the distal frame 3 in operation. The anchoring end 841 may also act as a wedge to firmly keep the laminar baffle 6 in position when the laminar baffle 6 is a separate element from the rest of the distal frame 3. In figures 10 and 11, it can be seen an example of distal frame 3 with cover 84.

When the laminar baffle 6 is a separated element, it can be fitted into the cleft 87 as illustrated in figures 10 and 11. Sides of the cleft 87 may have toothed regions to grip the baffle 9 inside the cleft 87.

Alternatively, the distal frame 3 may comprise an opening 80 defined at least by two parallel side walls 81, 82 and a back wall 83. The opening 80 may be configured to receive a panel 91 or the like to form the top or side portions 21, 22, 23. In figures 8 and 9, it can be seen that the panel 91 is fitted into the opening 80. The panel 91 may have an isolating material in some examples.

The proximal frame 13 may also comprise the opening 180 to receive the panel 91 at the other end like a corresponding example of the distal frame 3 which may be related to the panel 91. This example can be seen in figures 12 and 13.

Alternatively, the proximal frame 13 may comprise a construction similar to the example of distal frame 3 which is shown in figures 10 and 11 and may be related to the piece 92. This alternative proximal frame 13 can be seen in figures 14 and 15 and comprise the cover 184 which may be arranged separately from the rest of the proximal frame 13 and facing a complementary pressing surface 185. A piece 92 made from flexible material or the like may be clamped between the separate cover 184 and the pressing surface 185 like the analogous examples of the distal frame 3. The flexible material of the piece may be a plastic or the like. Alternatively, the piece 92 could be a panel.

The example of proximal frame 13 illustrated in figures 14 and 15 may comprise some of the features described in the example of figures 12 and 13 such as light sources 131, 134, first and second seals 136, 137 and so on. Figure 14 shows some fixing bolts B which may act along with the pair of supports 26 to attach the proximal frame 13 to the dock wall 102. Those bolts B may be provided in the proximal frame 13 along the top and side portions of the canopy 2.

The canopy 2 may further comprise a recess 135 in the proximal frame 13 to be facing the dock wall 102, and a first seal 136 received in the recess 135. The recess 135 and the first seal 136 may extend along the length of the proximal frame 13 or at least a portion thereof.

The first seal 136 may be at least partially embedded in the recess 135 and may protrude at least partially from the proximal frame 13 following a direction substantially parallel to the side or top portions. The first seal 136 may be configured to be facing the dock door wall 102. This way, the first seal 136 may be configured to bring into contact with the door wall 102. Thus, the first seal 136 may be a joint to be placed between the canopy 2 and the dock wall 102. The first seal 136 may be manufactured from a flexible material such as rubber or the like. Thus, the first seal 136 may be deformed so as to absorb any protuberance or irregularity extending from the dock wall 102. Therefore, any clearances between the top and side portions 21, 22, 23 and the dock wall 102 may be substantially avoided or at least reduced. Figure 12 schematically show the top portion 21 and the proximal frame 13 with the first seal 136 received in the recess 135, seen from a side.

The canopy 2 may also comprise a second seal 137 attached to the proximal frame 13. This second seal 137 may protrude from the top 21 or side portion 22, 23 and/or the proximal frame 13 to be facing the dock wall 102. The second seal 137 may be disposed at the outline of the dock shelter 1, at least partially. Thus, the second seal 137 may be placed surrounding the first seal 136. The second seal may have a generally elongated cross-section and may be positioned in such a way that an angle may be defined between the cross-section of the second seal and the top 21 or side portions 22, 23.

This second seal 137 may be attached to the proximal frame 13 through a tongued and grooved joint or the like. Therefore, the second seal 137 may be configured as being detachable. Furthermore, the second seal 137 may be manufactured from a substantially flexible material such as rubber or the like. Thus, the second seal 137 may be deformed so as to absorb protuberances or irregularities extending from the dock wall 102.

The second seal 137 may have an elongated cross-section substantially slanted with respect to the top or side portions and so the corresponding faces of the proximal frame 13. The elongated cross-section of the second seal 137 can be seen for instance in figures 12, 13. Although the second seal 137 of figures 12, 13 has a double lip configuration, it might have another configuration such as single lip. The lips of the illustrated second seal 137 show a different length to provide a suitable sealing regardless of the degree of deformation which may reach the second seal 137 when contacting the dock wall 102. The longer lip may be the outermost lip may be deformed further than the shorter lip.

Thanks to the elongated cross-section, the second seal 137 may present an enhanced capability to match or copy rough dock walls 102 such as those walls formed with corrugated metal sheets. The second seal 137 may be deformed so as to be adapted to the shape of the uneven surface of the rough dock walls 102. Thus, the second seal 137 may absorb greater irregularities such as protrusions or recesses in the shape of the dock wall 102, than the first seal 136.

In operation the second seal 137 may be brought into contact with the dock wall 102. Before coming into contact, the second seal 137 may look like the one in figures 12, 13. After coming into contact, the longer lip may be bent in a direction away from the canopy 2. Then, the shorter lip and the first seal 136 may come into contact with the wall 102. In figure 16, the dock shelter 1 is attached to the dock wall 10 and the second seal 137 is place in-between.

It could be envisaged examples of the proximal frame 13 having the first seal 136 and being devoid of the second seal 137.

It would be possible to combine the features of the first and/or second seal of figures 12 to 14 with other examples of dock shelters.

A method of operation of a dock shelter according to any of herein disclosed examples will be described in the following. The controller 300 may be configured to carry on the method of operation.

The method comprises changing a visual appearance of the distal light source 31 depending on the proximity of a vehicle 200 to the dock door 100. The distal light source 31 may be configured according to any of the herein disclosed examples.

The proximity sensor 301 may be able to detect the presence of a vehicle 200 in the nearby and it may sense the relative distance between the dock wall 102 or the distal face 24 and the vehicle 200 if any. The controller 300 may be fed with data provided by the sensor 301 and may determine such relative distance. If the distance is greater than a first distance threshold, e.g. 2.5 m, because the vehicle may be too far or there may be no vehicle in the nearby, the controller 300 may send a command to the distal light source 31 to show a first visual appearance. By way of example, the first visual appearance may comprise a first colour light and/or a steady light. If the distance is less than the first distance threshold but greater than a second distance threshold, the controller 300 may send a command to the distal light source 31 to show a second visual appearance. The second visual appearance may comprise a colour light other than the first colour. At this point the light may be steady or flashing. If the distance is less than the second distance threshold, the controller 300 may send a command to the distal light source 31 to show a third visual appearance. The third visual appearance may comprise a colour light other than the first and second colours. The light of the third visual appearance may be steady or flashing.

A change in the relative distance may trigger a change in visual appearance of the distal light source 31.

The number of distance thresholds and/or the visual appearance may vary as a function of particular requirements.

The visual appearance of the distal light source 31 and/or the light sign 7 may be changed continuously or stepwise.

Although the examples of the method disclosed herein are related to the visual appearance of the distal light source 31, the same may apply to the proximal light source.

In further examples of the method of operation of the dock shelter, it may comprise the features related to the operation of the light sign 7 as herein described.

Although only a number of examples have been disclosed herein, other alternatives, modifications, uses and/or equivalents thereof are possible. Furthermore, all possible combinations of the described examples are also covered.

## Claims

1. Dock shelter (1) to be placed around a dock door opening (101), comprising a U-shaped canopy (2) which has two side portions (22, 23) and one top portion (21),
the canopy (2) has a distal face (24) intended to be facing away from a dock door wall (102), wherein the canopy (2) comprises a U-shaped distal frame (3) positioned at the distal face (24),
wherein the dock shelter (1) comprises a distal light source (31) extending at least partially along the distal frame (3), and the distal light source (31) is adapted to change its visual appearance;
further comprising a proximity sensor (301) to detect the distance of a vehicle from the dock door (100), and a controller (300) to change the visual appearance of the distal light source (31) depending on the detected distance, wherein the controller (300) is configured to compare the distance with various distance thresholds to show various visual appearances, **characterised in that** the distal frame comprises a channel (32) and the distal light source (31) is arranged within the channel.

2. The dock shelter (1) according to claim 1, wherein the visual appearance is related to a colour of an emitted light and/or to an intermittence of the emitted light.

3. The dock shelter (1) according to any of claims 1 - 2, wherein the canopy (2) further comprises a proximal face (25) intended to be facing towards the dock door wall (102), wherein the canopy comprises a U-shaped proximal frame (13) positioned at the proximal face (25).

4. The dock shelter (1) according to claim 3, wherein the canopy (2) further comprises edge beams (27) placed between the top portion (21) and each of the side portions (22, 23), and positioned from the distal face to the proximal face.

5. The dock shelter (1) according to any of claims 1 - 4, further comprising a light sign (7) attached to the canopy (2) and adapted to change its visual appearance, wherein the visual appearance is related to a status of a specific dock door.

6. The dock shelter (1) according to claims 4 and 5, wherein the light sign (7) is attached to the edge beam (27).

7. The dock shelter (1) according to any of claims 1 - 6, wherein canopy (2) further comprises a curtain (41, 42, 43) attached to the distal frame (3), the distal frame comprising a pair of jaws (44, 45, 144, 145) to clamp at least one curtain between them, wherein one of the jaws (44, 144) is fixed to rest of the distal frame and the other jaw (45, 145) is movably attached to the rest of the distal frame.

8. The dock shelter (1) according to claim 7, wherein the movable jaw (45) can be moved towards and away from the fixed jaw (44).

9. The dock shelter (1) according to claim 8, wherein the movable jaw (45) has an L-shaped cross-section with a pressing portion (451) to clamp the curtain and a guiding portion (452) to guide the movable jaw towards and away from the fixed jaw.

10. The dock shelter (1) according to claim 9, wherein at least one of the jaws (145) is hinged to the distal frame.

11. The dock shelter (1) according to any of claims 1 - 10, wherein the canopy (2) further comprises a laminar baffle (6) in an upright position with respect to and along the top portion.

12. The dock shelter (1) according to claim 3, wherein the canopy (2) further comprises a recess (135) in the proximal frame, and a first seal (136) received in the recess, wherein the first seal is intended to be facing the dock door wall.

13. The dock shelter (1) according to claim 3, wherein the canopy (2) further comprises a proximal light source (131) extending at least partially along the proximal frame, wherein the proximal light source is positioned to be facing towards the dock door wall.

14. A method of operation of a dock shelter (1) according to any of claims 1 - 13, comprising:
changing a visual appearance of the distal light source depending on the proximity of a vehicle to the dock door by comparing a detected distance of a vehicle from the dock door with various distance thresholds to show various visual appearances.

## Patentansprüche

1. Torabdichtung (1) zum Anordnen um eine Docktüröffnung (101), umfassend ein U-förmiges Vordach (2), welches zwei Seitenabschnitte (22, 23) und einen oberen Abschnitt (21) hat,
das Vordach (2) hat eine distale Fläche (24), die dazu bestimmt ist, von einer Docktürwand (102) abgewandt zu sein, wobei das Vordach (2) einen U-förmigen distalen Rahmen (3) umfasst, der an der distalen Fläche (24) positioniert ist,
wobei die Torabdichtung (1) eine distale Lichtquelle (31) umfasst, die sich zumindest teilweise entlang des distalen Rahmens (3) erstreckt, und die distale Lichtquelle (31) angepasst ist, um ihr visuelles Erscheinungsbild zu ändern;
ferner umfassend einen Näherungssensor (301) zum Erkennen der Entfernung eines Fahrzeugs von der Docktür (100) und eine Steuerung (300) zum Ändern des visuellen Erscheinungsbilds der distalen Lichtquelle (31) in Abhängigkeit von der erkannten Entfernung, wobei die Steuerung (300) dazu konfiguriert ist, die Entfernung mit verschiedenen Entfernungsschwellenwerten zu vergleichen, um verschiedene visuelle Erscheinungen zu zeigen, **dadurch gekennzeichnet, dass** der distale Rahmen einen Kanal (32) umfasst und die distale Lichtquelle (31) in dem Kanal angeordnet ist.

2. Die Torabdichtung (1) nach Anspruch 1, wobei das visuelle Erscheinungsbild auf eine Farbe eines emittierten Lichts und/oder auf eine Unterbrechung des emittierten Lichts bezogen ist.

3. Die Torabdichtung (1) nach einem der Ansprüche 1 bis 2, wobei das Vordach (2) ferner eine proximale Fläche (25) umfasst, die dazu bestimmt ist, der Docktürwand (102) zugewandt zu sein, wobei das Vordach einen U-förmigen proximalen Rahmen (13) umfasst, der an der proximalen Fläche (25) positioniert ist.

4. Die Torabdichtung (1) nach Anspruch 3, wobei das Vordach (2) ferner Randträger (27) umfasst, die zwischen dem oberen Abschnitt (21) und jedem der Seitenabschnitte (22, 23) angeordnet sind und von der distalen Fläche zu der proximalen Fläche positioniert sind.

5. Die Torabdichtung (1) nach einem der Ansprüche 1 bis 4, ferner umfassend ein Lichtzeichen (7), das an dem Vordach (2) angebracht ist und angepasst ist, um sein visuelles Erscheinungsbild zu ändern, wobei das visuelle Erscheinungsbild auf einen Status einer spezifischen Docktür bezogen ist.

6. Die Torabdichtung (1) nach den Ansprüchen 4 und 5, wobei das Lichtzeichen (7) an dem Randbalken (27) angebracht ist.

7. Die Torabdichtung (1) nach einem der Ansprüche 1 bis 6, wobei das Vordach (2) ferner einen Vorhang (41, 42, 43) umfasst, der an dem distalen Rahmen (3) angebracht ist, wobei der distale Rahmen ein Paar von Backen (44, 45, 144, 145) umfasst, um mindestens einen Vorhang zwischen ihnen einzuklemmen, wobei eine der Backen (44, 144) an dem Rest des distalen Rahmens befestigt ist und die andere Backe (45, 145) beweglich an dem Rest des distalen Rahmens angebracht ist.

8. Die Torabdichtung (1) nach Anspruch 7, wobei die bewegliche Backe (45) zu der festen Backe (44) hin und von dieser weg bewegt werden kann.

9. Die Torabdichtung (1) nach Anspruch 8, wobei die bewegliche Backe (45) einen L-förmigen Querschnitt mit einem Pressabschnitt (451), um den Vorhang festzuklemmen, und einen Führungsabschnitt (452) hat, um die bewegliche Backe zu der festen Backe hin und von dieser weg zu führen.

10. Die Torabdichtung (1) nach Anspruch 9, wobei mindestens eine der Backen (145) an dem distalen Rahmen angelenkt ist.

11. Die Torabdichtung (1) nach einem der Ansprüche 1 bis 10, wobei das Vordach (2) ferner eine laminare Ablenkplatte (6) in einer aufrechten Position in Bezug auf und entlang des oberen Abschnitts umfasst.

12. Die Torabdichtung (1) nach Anspruch 3, wobei das Vordach (2) ferner eine Aussparung (135) in dem proximalen Rahmen und eine erste Dichtung (136) umfasst, die in der Aussparung aufgenommen ist, wobei die erste Dichtung dazu bestimmt ist, der Docktürwand zugewandt zu sein.

13. Die Torabdichtung (1) nach Anspruch 3, wobei das Vordach (2) ferner eine proximale Lichtquelle (131) umfasst, die sich zumindest teilweise entlang des proximalen Rahmens erstreckt, wobei die proximale Lichtquelle so positioniert ist, dass sie der Docktürwand zugewandt ist.

14. Ein Verfahren zum Betreiben einer Torabdichtung (1) nach einem der Ansprüche 1 bis 13, umfassend:
ändern eines visuellen Erscheinungsbilds der distalen Lichtquelle in Abhängigkeit von der Nähe eines Fahrzeugs zu der Docktür durch Vergleichen einer erkannten Entfernung eines Fahrzeugs von der Docktür mit verschiedenen Entfernungsschwellenwerten, um verschiedene visuelle Erscheinungsbilder zu zeigen.

## Revendications

1. Abri de quai (1) à placer autour d'une ouverture de porte de quai (101), comprenant un auvent (2) en forme de U qui a deux parties latérales (22, 23) et une partie supérieure (21),
l'auvent (2) a une face distale (24) destinée à être opposée à une paroi de porte de quai (102), dans lequel l'auvent (2) comprend un cadre distal (3) en forme de U positionné au niveau de la face distale (24),
dans lequel l'abri de quai (1) comprend une source de lumière distale (31) s'étendant au moins partiellement le long du cadre distal (3), et la source de lumière distale (31) est adaptée pour changer son apparence visuelle ;
comprenant en outre un capteur de proximité (301) pour détecter la distance d'un véhicule par rapport à la porte de quai (100), et un contrôleur (300) pour changer l'apparence visuelle de la source de lumière distale (31) en fonction de la distance détectée, dans lequel le contrôleur (300) est configuré pour comparer la distance avec divers seuils de distance pour montrer diverses apparences visuelles, **caractérisé en ce que** le cadre distal comprend un canal (32) et la source de lumière distale (31) est agencée à l'intérieur du canal.

2. L'abri de quai (1) selon la revendication 1, dans lequel l'apparence visuelle est liée à une couleur d'une lumière émise et/ou à une intermittence de la lumière émise.

3. L'abri de quai (1) selon l'une quelconque des revendications 1 à 2, dans lequel l'auvent (2) comprend en outre une face proximale (25) destinée à être tournée vers la paroi de porte de quai (102), dans lequel l'auvent comprend un cadre proximal en forme de U (13) positionné au niveau de la face proximale (25).

4. L'abri de quai (1) selon la revendication 3, dans lequel l'auvent (2) comprend en outre des poutres de bord (27) placées entre la partie supérieure (21) et chacune des parties latérales (22, 23), et positionnées de la face distale à la face proximale.

5. L'abri de quai (1) selon l'une quelconque des revendications 1 à 4, comprenant en outre un signal lumineux (7) attaché à l'auvent (2) et adapté pour changer son apparence visuelle, dans lequel l'apparence visuelle est liée à un état d'une porte de quai spécifique.

6. L'abri de quai (1) selon les revendications 4 et 5, dans lequel le signal lumineux (7) est attaché à la poutre de bord (27).

7. L'abri de quai (1) selon l'une quelconque des revendications 1 à 6, dans lequel l'auvent (2) comprend en outre un rideau (41, 42, 43) attaché au cadre distal (3), le cadre distal comprenant une paire de mâchoires (44, 45, 144, 145) pour serrer au moins un rideau entre elles, dans lequel l'une des mâchoires (44, 144) est fixée au reste du cadre distal et l'autre mâchoire (45, 145) est attachée de manière mobile au reste du cadre distal.

8. L'abri de quai (1) selon la revendication 7, dans lequel la mâchoire mobile (45) peut être déplacée vers et à l'écart de la mâchoire fixe (44).

9. L'abri de quai (1) selon la revendication 8, dans lequel la mâchoire mobile (45) a une section transversale en forme de L avec une partie de pression (451) pour serrer le rideau et une partie de guidage (452) pour guider la mâchoire mobile vers et à l'écart de la mâchoire fixe.

10. L'abri de quai (1) selon la revendication 9, dans lequel au moins l'une des mâchoires (145) est articulée sur le cadre distal.

11. L'abri de quai (1) selon l'une quelconque des revendications 1 à 10, dans lequel l'auvent (2) comprend en outre un déflecteur laminaire (6) dans une position verticale par rapport à et le long de la partie supérieure.

12. L'abri de quai (1) selon la revendication 3, dans lequel l'auvent (2) comprend en outre un évidement (135) dans le cadre proximal, et un premier joint (136) reçu dans l'évidement, dans lequel le premier joint est destiné à faire face à la paroi de la porte de quai.

13. L'abri de quai (1) selon la revendication 3, dans lequel l'auvent (2) comprend en outre une source de lumière proximale (131) s'étendant au moins en partie le long du cadre proximal, dans lequel la source de lumière proximale est positionnée pour être tournée vers la paroi de la porte de quai.

14. Un procédé de fonctionnement d'un abri de quai (1) selon l'une quelconque des revendications 1 à 13, comprenant :
modifier une apparence visuelle de la source de lumière distale en fonction de la proximité d'un véhicule par rapport à la porte de quai par comparaison d'une distance détectée d'un véhicule par rapport à la porte de quai avec divers seuils de distance pour montrer divers apparences visuelles.
